Europäisches Patentamt

European Patent Office

Office européen des brevets

(11) Numéro de publication: **0 012 058**
**A1**

(12) **DEMANDE DE BREVET EUROPEEN**

(21) Numéro de dépôt: **79400876.3**

(22) Date de dépôt: **14.11.79**

(51) Int. Cl.³: **G 01 F 1/66**

---

(30) Priorité: **29.11.78 FR 7833714**

(43) Date de publication de la demande:
**11.06.80 Bulletin 80/12**

(84) Etats Contractants Désignés:
**BE CH DE GB IT NL SE**

(71) Demandeur: **Framatome**
**Tour Fiat 1 place de la Coupole**
**F-92400 Courbevoie(FR)**

(72) Inventeur: **Marini, Jean**
**Chemin du Bois Martin**
**F-78160 Marly Le Roi(FR)**

(72) Inventeur: **Heinrich, Jean Paul**
**48 avenue Gambetta**
**F-92400 Courbevoie(FR)**

(74) Mandataire: **Bouget, Lucien et al,**
**CREUSOT-LOIRE 15 rue Pasquier**
**F-75383 Paris Cedex 08(FR)**

---

(54) **Dispositif de mesure d'un paramètre relatif à un fluide en écoulement dans une canalisation.**

(57) L'invention concerne un dispositif de mesure d'un paramètre relatif à un fluide en écoulement dans une canalisation utilisant la propagation d'une onde acoustique à travers cette canalisation entre des transducteurs émetteurs et récepteurs.

Le dispositif comporte des moyens pour déterminer le temps de propagation de l'onde acoustique entre les transducteurs 15a, 15b, 16a, 16b et des moyens 20, 21 pour calculer les différences entre les temps de propagation de l'onde acoustique dans un sens et dand l'autre. Des moyens 26 permettent de traiter les différences entre les temps de propagation pour en déduire le paramètre mesuré. Le dispositif comporte au moins deux paires de transducteurs 15a, 15b - 16a, 16b disposés sur une voie de mesure 17, 19 passant par l'axe 18 de la canalisation 23, la position de chacune des voies de mesure se déduisant de la position d'une autre voie de mesure par une rotation de $\frac{2}{n}\pi$ autour de l'axe 18 de la canalisation 23. On utilise la valeur moyenne des mesures différentielles obtenues pour chacune des voies de mesure pour calculer le paramètre dont on effectue la mesure.

L'invention s'applique, en particulier, aux mesures de puissance sur le circuit primaire d'un réacteur à eau sous pression.

fig 3

EP 0 012 058 A1

"Dispositif de mesure d'un paramètre relatif à un fluide en écoulement dans une canalisation"

L'invention concerne un dispositif de mesure d'un paramètre relatif à un fluide en écoulement dans une canalisation utilisant la propagation d'une onde acoustique à travers cette canalisation entre des transducteurs émetteurs et récepteurs disposés de part et d'autre de la canalisation.

Pour effectuer des mesures de débit d'un fluide dans une canalisation, par exemple de l'eau sous pression du circuit primaire ou de l'eau alimentaire du circuit secondaire d'un réacteur nucléaire à eau pressurisée, on a préconisé l'utilisation d'ondes acoustiques dont on mesure les temps de propagation entre des transducteurs émetteurs et récepteurs disposés de part et d'autre de la canalisation où s'effectue l'écoulement de l'eau.

Cette méthode de mesure est également connue dans d'autres applications, par exemple dans le cas de la mesure de débit d'un écoulement fluide circulant à l'air libre dans un canal.

Dans le cas des réacteurs nucléaires, cependant, comme dans d'autres cas où l'on est en présence d'un fluide en circulation dans une canalisation par exemple pour assurer le refroidissement d'une machine ou d'une installation de production d'énergie, ou plus généralement dans tous les cas où l'on est en présence d'une canalisation comportant des coudes, des bifurcations, des piquages ou des changements de direction ou de section, il faut prévoir une adaptation de la méthode de mesure. En effet, l'irrégularité de la forme des tuyauteries peut provoquer des perturbations importantes de l'écoulement.

La seule méthode dont on dispose jusqu'ici pour tenir compte d'une dissymétrie dans la géométrie de l'écoulement consiste à faire intervenir des coefficients correctifs déterminés par des essais, au moment de l'interprétation des résultats des mesures de temps de propagation de l'onde acoustique à travers le fluide en déplacement dans la canalisation.

Les coefficients correctifs à appliquer à la mesure sont cependant spécifiques d'une géométrie de la canalisation et d'une implantation particulière des transducteurs. En prenant pour référence la valeur unité dans le cas d'une canalisation parfaitement linéaire à l'amont et à l'aval des capteurs la valeur à attribuer aux coefficients correctifs peut être supérieure ou inférieure à l'unité dans le cas d'une implantation des

0012058

transducteurs particulièrement inappropriée à la géométrie de la canalisation.

Dans le cas d'une implantation sur le circuit primaire d'un réacteur nucléaire à eau pressurisée, l'expérimentation montre qu'on doit souvent apporter aux mesures une correction d'une valeur de 20 à 25 % de la valeur résultant de la mesure.

Une technique courante de mesure de débit ou d'un autre paramètre relatif à l'écoulement dans une canalisation ou un canal ouvert consiste à disposer de part et d'autre du conduit dans lequel èst véhiculé l'écoule ment, des transducteurs situés deux à deux en vis à vis de façon que l'onde acoustique puisse/déplacer entre ces deux transducteurs dans un sens et dans l'autre à travers le fluide en écoulement, à mesurer les temps de propagation de l'onde acoustique entre les deux transducteurs dans un sens et dans l'autre, à calculer la différence entre ces temps de propagation et à calculer le paramètre à partir de cette différence entre les temps de propagation dans un sens et dans l'autre.

Dans le cas d'une telle mesure différentielle utilisant des couples de transducteurs disposés de façon à constituer des voies de mesure placées obliquement le long d'une tuyauterie, les mesures dépendent des modifications du profil des vitesses dont la répartition varie en fonction du débit. Ces modifications sont particulièrement sensibles lorsqu'on passe d'un régime laminaire d'un écoulement à un régime turbulent.

Afin de s'affranchir de ces modifications du profil de vitesse, on a proposé, ainsi qu'il est décrit dans le brevet américain 3.564.912, de disposer n paires de transducteurs constituant n voies de mesure disposées obliquement le long de la tuyauterie sur des plans parallèles longitudinaux décalés d'une valeur théorique fonction de n. L'intégration par la formule de GAUSS des n mesures maintient constante la valeur intégrée quel que soit le profil des vitesses et son évolution. Il faut cependant que les vitesses du fluide dans la canalisation puissent être mises sous la forme d'une expression qui est un polynome de degré 2n - 1, en fonction de la distance du plan considéré dans lequel on effectue la mesure, au plan de référence constitué par le plan de symétrie de la canalisation parallèle au plan de mesure. Dans la pratique, ceci n'est pas possible, mais les écarts sont cependant négligeables.

3

0012058

Ce procédé est très intéressant lorsque l'écoulement est susceptible de varier fortement et que cet écoulement ne comporte pas de composante vortex mais ne présente qu'un intérêt réduit dans le cas de canalisations de réacteur nucléaire où le débit ne varie que de 20 % environ autour du régime nominal. D'autre part dans ce cas, l'irrégularité de la forme des tuyauteries impose d'appliquer de toute façon aux mesures de débit par ultra-sons, un coefficient correctif tenant compte de la géométrie de la canalisation et éventuellement du profil de vitesse.

Les méthodes de correction des mesures qu'on a envisagé jusqu' ici sont en effet des méthodes supposant que les vecteurs vitesses matérialisant l'écoulement du fluide dans la canalisation sont tous parallèles à l'axe théorique de cette canalisation. Dans le cas d'une canalisation qui n'est pas rectiligne et de grande longueur, cette condition idéale n'est plus rigoureusement vraie.

Dans le cas des tuyauteries comportant un coude, la perturbation apportée par ce coude se traduit par un phénomène de vortex, c'est à dire par la mise en mouvement du fluide dans un plan perpendiculaire à l'axe de l'écoulement. La vitesse d'une particule du fluide en déplacement n'est alors plus colinéaire à l'axe de la canalisation mais inclinée par la présence d'une composante perpendiculaire, ou composante vortex.

Le but de l'invention est donc de proposer un dispositif de mesure d'un paramètre relatif à un fluide en écoulement dans une canalisation utilisant la propagation d'une onde acoustique à travers cette canalisation entre des transducteurs émetteurs et recepteurs disposés de part et d'autre de la canalisation, situés par paires en vis à vis de façon à ce que l'onde acoustique se déplace dans les deux sens sur une ligne joignant les deux transducteurs constituant une voie de mesure, le dispositif comportant des moyens pour déterminer le temps de propagation de l'onde acoustique, des moyens pour calculer les différences entre les temps de propagation dans un sens et dans l'autre de l'onde acoustique entre deux transducteurs d'une voie de mesure et des moyens pour traiter cette différence pour en déduire le paramètre désiré, de façon qu'il soit tenu compte de l'influence de l'angle formé entre l'écoulement réel des fluides et l'axe théorique de la canalisation ou de la veine fluide et plus particulièrement, de façon à éliminer l'influence des composantes de vitesse perpendiculaires à l'axe de la canalisation.

Dans ce but, le dispositif selon l'invention comporte :

- au moins deux paires de deux transducteurs disposés sur une voie de mesure passant par l'axe de la canalisation, la position de chacune des voies de mesure se déduisant de la position d'une autre voie de mesure par une rotation autour de l'axe de la canalisation, d'un angle égal à $\frac{2\pi}{n}$ , où n est le nombre de paires de transducteurs,

- un sommateur permettant de calculer la moyenne des mesures différentielles obtenue pour chacune des voies de mesure,

- et des moyens pour introduire cette valeur dans le moyen de calcul du paramètre mesuré.

Afin de bien faire comprendre l'invention, on va maintenant décrire à titre d'exemple non limitatif un mode de réalisation d'un dispositif de mesure selon l'invention appliqué au cas de la mesure d'un débit de fluide dans une canalisation primaire d'un réacteur nucléaire à eau sous pression.

La figure 1 représente, dans une vue en élévation, un générateur de vapeur d'un réacteur à eau sous pression au voisinage duquel la canalisation primaire a été équipée de dispositifs de mesure selon l'invention.

La figure 2 représente dans une vue en coupe la canalisation au niveau d'un dispositif de mesure, dans le cas d'un écoulement dirigé suivant l'axe de la canalisation.

La figure 3 représente dans une vue analogue à celle de la figure 2, la même canalisation dans laquelle l'écoulement présente un effet vortex.

La figure 4 représente un graphique donnant le rapport du débit mesuré sur le débit réel, c'est à dire le coefficient correctif K, dans le cas où ce débit est mesuré par un dispositif suivant l'invention et dans le cas où ce débit est mesuré suivant une méthode de l'art antérieur.

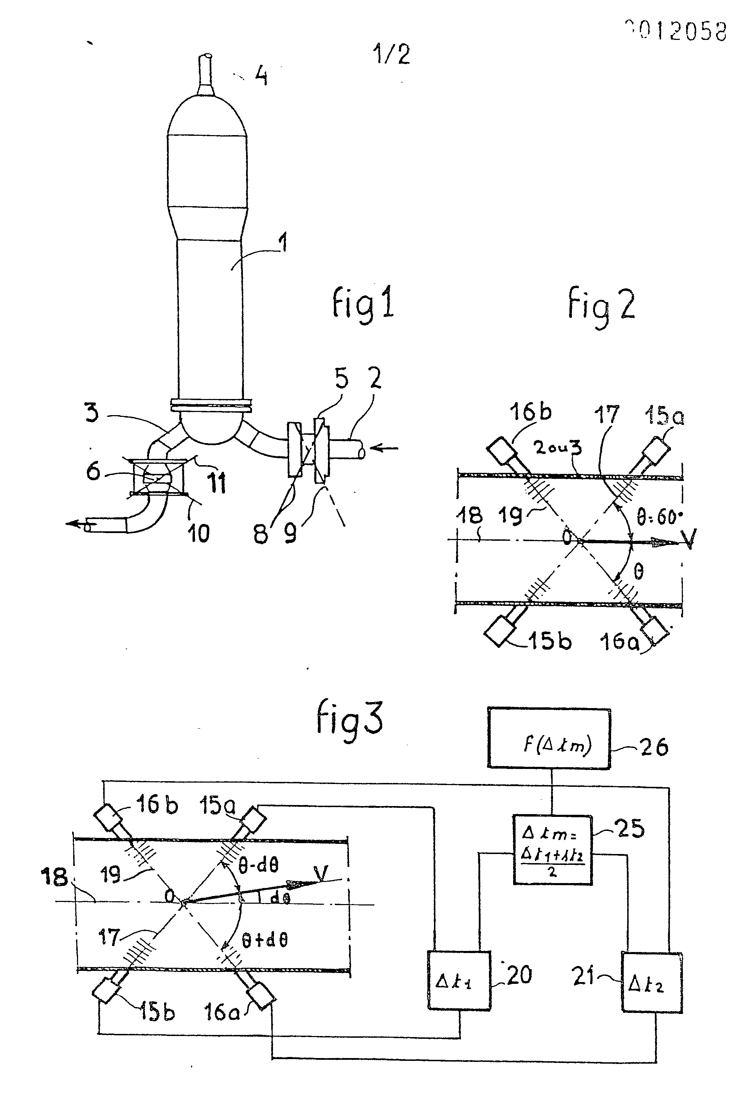

En se reportant à la figure 1, on voit un générateur de vapeur 1 alimenté en eau primaire par une canalisation du circuit primaire 2. Après circulation dans le générateur de vapeur l'eau primaire ressort par la canalisation du circuit primaire 3 pour retourner dans la cuve du réacteur Le générateur de vapeur produit de la vapeur emmenée vers la turbine par une canalisation 4.

On a disposé dans les parties des canalisations primaires 2 et 3 comportant des coudes et des changements de direction, des manchettes 5 et 6 portant chacune deux voies de mesure croisées 8 et 9 et 10 et 11, constituant les éléments d'émission et de détection de deux dispositifs de mesure suivant l'invention.

Ces deux dispositifs de mesure disposés, l'un à l'amont et l'autre à l'aval du générateur de vapeur, permettent de déterminer la puissance dis-

pensée à l'intérieur du générateur de vapeur par l'eau du circuit primaire, lorsqu'on effectue, simultanément à la mesure de débit, une mesure de température de l'eau primaire.

En se reportant à la figure 2, on voit une canalisation du circuit primaire 2. (ou 3) sur la paroi de laquelle on a disposé deux transducteurs 15a et 15b permettant l'émission et la réception d'ultra-sons, l'onde acoustique se déplaçant le long d'une ligne droite 17 disposée angulairement par rapport à l'axe 18 de la canalisation.

L'axe de la canalisation et la ligne de capteurs 17 font un angle $\theta$ .

Une ligne de capteurs 16a, 16b est également disposée sur la paroi de la canalisation symétriquement par rapport à la ligne 15a, 15b, la ligne de mesure 19 et la position des capteurs 16a et 16b étant obtenues à partir de la ligne 17 et des capteurs 15a et 15b constituant la première voie de mesure par une rotation de la voie de mesure (15a, 15b) autour de l'axe 18 d'un angle de 180°.

Au cours de cette rotation de 180°, le capteur 15a viendrait dans une position 16a et le capteur 15b dans une position 16b. Les deux lignes de mesure 17 et 19 se croisent au point 0 sur l'axe 18 de la canalisation. La ligne de mesure (16a, 16b) fait également un angle $\theta$ avec l'axe 18 de la canalisation.

Sur la figure 2 on a représenté symboliquement. l'écoulement dont les vecteurs vitesse sont dirigés parallèlement à l'axe de la canalisation par un vecteur V suivant l'axe de cette canalisation.

Si l'on émet des ultra-sons à partir du transducteur 15a vers le transducteur 15b et simultanément du transducteur 15b vers le transducteur 15a, et si l'on produit ensuite des déplacements similaires des ultra-sons entre les transducteurs 16a et 16b, il est possible de calculer le temps de parcours des ultra-sons entre les détecteurs dans un sens et dans l'autre.

Si l'on désigne par c la vitesse du son dans le fluide en circulation dans la canalisation, par 1 la distance entre le capteur 15a et le capteur 15b (ou entre le capteur 16a et le capteur 16b), par t1 ab le temps de parcours entre le capteur 15a et le capteur 15b, par t1 ba le temps de parcours des ultra-sons entre le capteur 15b et le capteur 15a et par t2 ab et t2 ba les temps correspondants entre les capteurs 16a et 16b les différences de temps de propagation peuvent s'écrire :

$$\Delta t1 = tab - tba = \frac{1}{c - v \ \cos\theta} - \frac{1}{c + v \ \cos\theta}$$

$$\Delta t1 = \frac{21 \quad v \quad \cos\theta}{c^2 - v^2 \cos^2\theta}$$

soit en négligeant $v^2$ devant $c^2$ puisque v vitesse de circulation du fluide dans la canalisation est très inférieure à la vitesse du son.

$$\Delta t1 = \frac{21 \quad v \quad \cos\theta}{c^2} = A \cos\theta \quad \text{avec } A = \frac{21v}{c^2} \quad \text{et}$$

$$\Delta t2 = t2\ ab - t2\ ba = A \cos\theta$$

Les calculs rappelés ci-dessus qui sont tout à fait classiques dans le cas des mesures de débit par mesures différentielles de temps de propagation des ultra-sons qui tiennent compte du retard ou de l'avance apportés par la vitesse du fluide à la propagation des ultra-sons dans le fluide de la conduite, montrent que les retards de propagation sur les deux cordes 17 et 19 obtenues par rotation de 180° autour de l'axe 18 de la canalisation sont identiques lorsque le vecteur vitesse V du fluide dans la canalisation est porté par l'axe de cette canalisation.

D'autre part on voit que l'on peut calculer la vitesse V du fluide à partir de la mesure des différences de temps de propagation quelle que soit la voie de mesure choisie, lorsque l'écoulement n'a pas de composante vortex.

Dans le cas de la figure 3, on voit que le vecteur vitesse V représentatif de l'écoulement n'est pas dirigé suivant l'axe de la canalisation avec lequel il fait un petit angle $d\theta$. On a choisi le même repère pour désigner les éléments semblables sur les figures 2 et 3. Le vecteur vitesse V fait un angle $\theta - d\theta$ avec la ligne de mesure 17 et une angle $\theta + d\theta$ avec la ligne de mesure 19.

Dans ces conditions le calcul précédent de $\Delta t1$ et de $\Delta t2$ devient :

$$\Delta t1 = A \cos(\theta - d\theta) > A \cos\theta$$
$$\text{et} \quad \Delta t2 = A \cos(\theta + d\theta) < A \cos\theta$$

Dans ce cas, les valeurs de la différence de temps de propagation ne sont plus identiques pour les deux voies de mesure.

En calculant la moyenne des valeurs $\Delta t1$ et $\Delta t2$ on obtient :

$$\frac{\Delta t1 + \Delta t2}{2} = A \cos\theta \ \cos d\theta$$

Lorsque la présence d'un vortex provoque une inclinaison du vecteur vitesse de quelques degrés, par exemple 8°, la valeur de $\frac{\Delta t1 + \Delta t2}{2} =$ A $\cos\theta \ \cos d\theta$ reste constante à 1 % près, alors que les valeurs de

$\triangle$ t1 et $\triangle$ t2 pour les deux voies de mesure diffèrent de près de 15 %.

On voit d'autre part sur la figure 3 l'ensemble du dispositif de mesure comportant des modules de calcul 20 et 21 permettant de déterminer à partir des indications des capteurs 15a et 15b, 16a et 16b respectivement, les différences de temps de propagation dans un sens et dans l'autre de l'onde ultra-sonore entre ces capteurs, $\triangle$ t1 et $\triangle$ t2.

Le dispositif comporte également un module de calcul 25 permettant de calculer la moyenne $\frac{\triangle t1 + \triangle t2}{2} = \triangle tm$ pour introduire cette valeur dans un calculateur 26 qui permet la détermination de la valeur de la vitesse v et donc du débit d de l'eau dans la canalisation à partir de la valeur moyenne $\triangle tm$ de la différence de temps de propagation dans les deux voies de mesure.

On voit ainsi que la prise en compte de la valeur moyenne de $\triangle t$ sur deux voies de mesure obtenues par une rotation de 180° autour de l'axe de la canalisation permet d'éliminer les perturbations apportées par un effet vortex de l'écoulement dans la canalisation.

On obtient ainsi une mesure constante en utilisant deux voies de mesure concourant sur l'axe de la canalisation, malgré une composante de la vitesse perpendiculaire à l'axe de la canalisation.

En réalité, on peut remarquer que la vitesse n'étant pas constante sur toute la voie de mesure, c'est à dire dans une direction transversale par rapport à la canalisation, la mesure de vitesse effectuée représente en réalité une intégration des vecteurs vitesse le long des voies de mesure.

Ces mesures permettent également une mesure de débit dans la canalisation et lorsqu'on effectue une mesure de température simultanément à la mesure de débit dans la canalisation, dans le cas du montage représen-té à la figure 1, on peut déduire de l'ensemble des mesures effectuées la puissance fournie au générateur de vapeur par le fluide primaire.

La mesure ultra-sonore , à partir du moment où l'on a réalisé un étalonnage du temps de parcours des ondes ultra sonores entre les détecteurs à une certaine température, permet d'effectuer la mesure de température également par mesure différentielle des temps de parcours de l'onde ultra-sonore entre les détecteurs.

Grâce à des manchettes tournantes disposées autour de la canalisation où l'on effectue la mesure et mobile en rotation autour de l'axe de cette canalisation, on a pu réaliser des mesures en utilisant une seule voie de mesure et en utilisant deux voies de mesure à 180° comme représen-

8                                          0012058

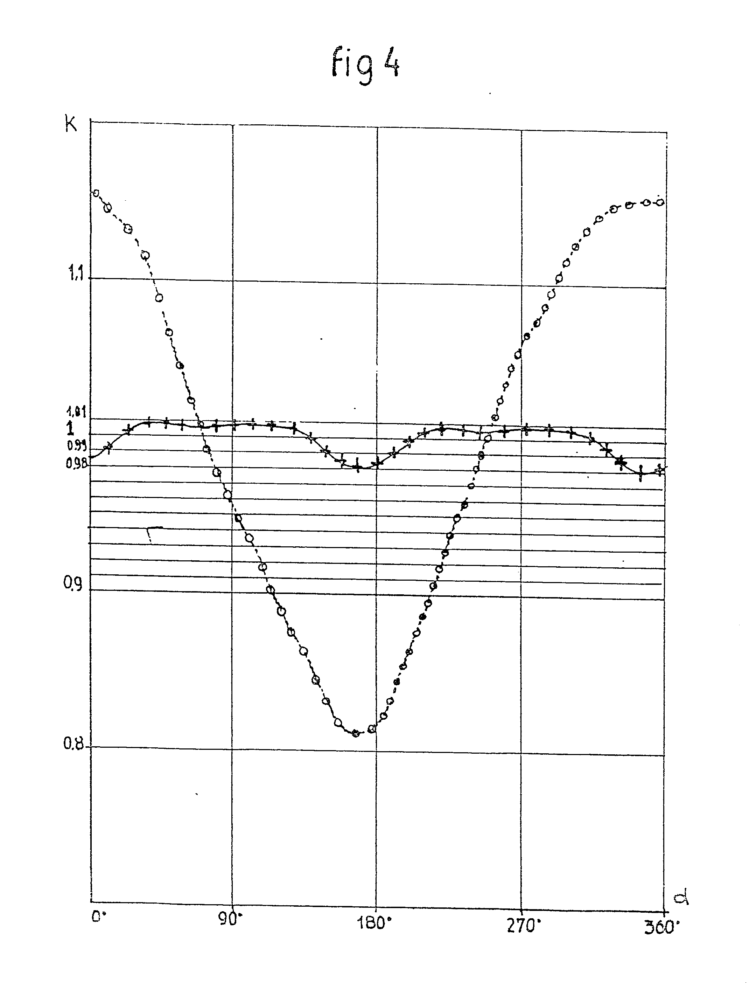

...s aux figures 2 et 3, pour des positions diverses de la manchette autour de la canalisation, c'est à dire pour des angles $\alpha'$ différents figurant en abscisses sur la figure 4, entre la ligne de mesure et le plan
d'un coude de la canalisation servant de plan d'origine pour mesurer l'orientation.

La figure 4 représente le rapport k entre le débit mesuré par
ultra-sons soit à l'aide d'une seule ligne de mesure soit à l'aide de
deux lignes de mesure croisées selon l'invention sur le débit réel passant
dans la canalisation en fonction de l'angle $\alpha'$ .

On voit que les points correspondant aux mesures effectuées avec
une seule voie de mesure repérés par des cercles sont disposés sur une
courbe connaissant une grande amplitude de variation par rapport à la
valeur k = 1 représentant une valeur exacte de la mesure.

Cette courbe traduit les variations dues à l'effet vortex créé par
le coude de la canalisation.

Par contre, les points représentatifs des mesures effectuées avec
deux lignes de mesure croisées déduites l'une de l'autre par une rotation
à 180° autour de l'axe de la canalisation et représentés par des croix sur
la figure 4 se situent sur une courbe connaissant une variation peu importante autour de la valeur k = 1 correspondant à la mesure dans une canalisation droite.

On voit que toutes les valeurs obtenues pour le coefficient k sont
comprises entre 0,98 et 1,01.

Il apparait donc tout à fait clairement sur la figure 4 que le dispositif de mesure suivant l'invention permet d'obtenir une mesure reproductible éliminant les effets des composantes vortex de la vitesse d'écoulement.

L'invention ne se limite pas au mode de réalisation qui vient d'être
décrit elle en comprend au contraire toutes les variantes.

C'est ainsi qu'au lieu d'utiliser des capteurs disposés suivant des
voies de mesure décalées de 180° et au nombre de deux, il est possible
d'utiliser un plus grand nombre de voies de mesure par exemple trois ou
quatre voies de mesure décalées d'un angle de $\frac{2}{3}\pi$ ou $\frac{2\pi}{4}$ autour de l'axe
de la canalisation.

Il est bien entendu que les mesures et calculs des $\Delta t$ et de leurs
moyennes peuvent être réalisés de façon quelconque numérique ou analogique,
à partir des mesures de temps réalisées au niveau des transducteurs.

Il est bien évident également qu'on peut utiliser n'importe quelle forme d'onde acoustique dont la propagation peut être facilement détectée à travers la canalisation.

Enfin, il est bien évident que le dispositif suivant l'invention peut s'appliquer non seulement au cas d'une mesure effectuée sur les canalisations du circuit primaire d'un réacteur nucléaire mais encore au cas de mesure effectuée sur le circuit d'eau alimentaire, c'est à dire le circuit secondaire du réacteur ou sur tout autre circuit de fluide en mouvement dont on veut connaître avec précision un paramètre tel qu'un paramètre lié à la vitesse d'écoulement comme le débit ou un autre paramètre tel que la température, liée à la vitesse du son dans la canalisation.

REVENDICATIONS

1.- Dispositif de mesure d'un paramètre relatif à un fluide en écoulement dans une canalisation utilisant la propagation d'une onde acoustique à travers cette canalisation entre des transducteurs émetteurs et récepteurs disposés depart et d'autre de la canalisation situés par paires en vis à vis de façon que l'onde acoustique se déplace dans les deux sens sur une ligne joignant les deux transducteurs constituant une voie de mesure, le dispositif comportant des moyens pour déterminer le temps de propagation de l'onde acoustique, des moyens pour calculer les différences entre les temps de propagation dans un sens et dans l'autre de l'onde acoustique entre deux transducteurs d'une voie de mesure et des moyens pour traiter cette différence pour en déduire le paramètre mesuré, caractérisé par le fait qu'il comporte :

- au moins deux paires de deux transducteurs 15a-15b, 16a-16b disposés sur une voie de mesure 17, 19 passant par l'axe de la canalisation, la position de chacune des voies de mesure se déduisant de la position d'une autre voie de mesure par une rotation autour de l'axe 18 de la canalisation 2, 3, d'un angle égal à $\dfrac{2\pi}{n}$ où n est le nombre de paires de transducteurs,

- un sommateur 25 permettant de calculer la moyenne des mesures différentielles obtenues pour chacune des voies de mesure 17, 19

- et des moyens pour introduire cette valeur dans le moyen de calcul 26 du paramètre mesuré.

2.- Dispositif de mesure de débit d'un fluide en écoulement dans une canalisation suivant la revendication 1 caractérisé par le fait qu'il comporte deux voies de mesure 17, 19 décalées de 180° si l'on considère une rotation autour de l'axe 18 de la canalisation 2, 3 dans laquelle on fait la mesure et que les moyens de calcul 26 du débit prennent en compte la longueur de la voie de mesure 17, 19, la vitesse du son dans le fluide en circulation dans la canalisation, pour déterminer la vitesse de circulation du fluide et le débit à partir de la moyenne des différences de temps de propagation suivant les deux lignes de mesure 17, 19.

3.- Dispositif selon l'une quelconque des revendications 1 et 2 caractérisé par le fait qu'il est placé sur une canalisation 2, 3 du circuit primaire d'un réacteur nucléaire au voisinage de sa zone de jonction au générateur de vapeur 1 du réacteur,

fig 1

fig 2

2 ou 3

θ = 60°

V

fig 3

$f(\Delta tm)$ — 26

$\Delta tm = \dfrac{\Delta t_1 + \Delta t_2}{2}$ — 25

θ−dθ

V

dθ

θ+dθ

$\Delta t_1$ — 20

21 — $\Delta t_2$

fig 4

**Office européen des brevets**

**RAPPORT DE RECHERCHE EUROPEENNE**

Numéro de la demande

3012058

EP 79.40 0876

| Catégorie | Citation du document avec indication, en cas de besoin, des parties pertinentes | Revendication concernée |
|---|---|---|
| | **DOCUMENTS CONSIDERES COMME PERTINENTS** | |
| X | US - A - 3 633 415 (J.W. LUCE)<br>* Figures 1,2; colonne 1, lignes 48-68; colonne 3, lignes 59-66 * | 1 |
| | -- | |
| | US - A - 3 978 726 (H.H. SHIH)<br>* Figures 2,3,12 * | 1,2 |
| | -- -- | |
| | DE - A - 1 523 248 (ALBIN SPRENGER K.G.)<br>* Figures 2,6 * | 1,2 |
| | -- | |
| | S.T.Z. vol. 60, 4 avril 1963, no. 14,<br>Wabern (CH)<br>"Akustischer Strömungsmesser auf Halbleiterbasis und ohne bewegliche Teile", page 263.<br>* En entier * | 1,2 |
| | ---- | |

**CLASSEMENT DE LA DEMANDE (Int. Cl. ³)**

G 01 F 1/66

**DOMAINES TECHNIQUES RECHERCHES (Int. Cl. ³)**

G 01 F 1/66
G 01 P 5/00

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interference
D: document cité dans la demande
L: document cité pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 03-03-1980 | THIBO |

OEB Form 1503.1 06.78